# EUROPEAN PATENT SPECIFICATION

(11) **EP 2 109 213 B1**
(45) Date of publication and mention of the grant of the patent: **25.01.2017**
(21) Application number: 09004961.0
(22) Date of filing: 03.04.2009
(51) Int. Cl.: H02P 9/48, B60R 16/03, H02J 7/14

(54) **Method and control system for selectively supplying power to an electric charge by a dynamo electric generator**
Verfahren und Steuersystem zur selektiven Stromversorgung einer elektrischen Ladung über einen dynamo elektrischen Generator
Procédé et système de contrôle pour l'alimentation sélective d'une charge électrique par un générateur électro-magnétique

(30) Priority: 10.04.2008 IT MI20080634
(43) Date of publication of application: 14.10.2009
(73) Proprietor: DUCATI ENERGIA S.p.A., 40132 Bologna (IT)
(72) Inventor: Regazzi, Gianni, 40050 Argelato, Bologna (IT); De Angelis, Alessandro, 63100 Ascoli Piceno (IT); Calabri, Pierluigi, 40068 San Lazzaro di S., Bologna (IT)
(74) Representative: Brunacci, Marco

(56) References cited:
- US-A1- 2003 039 130
- US-B1- 6 239 996
- US-B1- 6 825 575
- US-B1- 6 982 499

## Description

### BACKGROUND OF THE INVENTION

The present invention refers to a method and an electronic control system for selectively supplying power to electric charges by a multiphase voltage generator of permanent magnet type, more simply "magneto generator", where the voltage generator is operatively connected to a combustion engine subjected to a variable running between a maximum and a minimum value, or within a rotational speed range (rpm) bridging a threshold value.

The invention is particularly directed to an electronic control system for supplying power to electric charges in general, particularly electric charges supplied by a multiphase magnetogenerator controlled by an engine for motor vehicles, both of land and water type, or for other applications.

In many electronic systems for control of multiphase voltage generators, of the permanent magnet type, for example as described in US-A-7,026,794, and in the case of voltage regulators for magneto generators having a configurable connection of the phase windings, use is frequently made of circuit solutions which change the connection configuration of the phase windings of the generator to obtain a required output voltage or the voltage for supplying an electric charge, even when the number of revolutions of the engine to which the voltage generator is normally connected, is low. However these solutions, although working, require the use of a complex electronic to change the connection of the windings, essentially based on SCR switches, since a system provided with Power MOS switches would make the control more complex. Also, since the SCR switches have a higher voltage drop compared to the Power MOS, and at a same current value, greater energy dissipation will occur.

Document US 2003/039130 A1 discloses an alternator system that, in one aspect, utilizes a Lundell style alternator that is augmented by power electronic switching components in the output section.

Document US 6 239 996 B1 discloses a dual output alternator system that includes an alternating current voltage source controllable by controlling a filed current, a rectifier coupled to the ac voltage source and having first and second outputs coupled to respective ones of first and second outputs of the dual output alternator system, a sensor coupled to at least one of the ac voltage source, an engine and a back emf signal source and a control system having a first input couplet to an output of the sensor, a second input coupled to at least one of the first and second outputs of the dual output alternator system and a first output coupled to the rectifier.

### OBJECT OF THE INVENTION

An object of the invention is to provide an electronic control system for multiphase voltage generators, of the permanent magnet type, by which it is possible to obviate the problems of the electronic control systems of the prior art.

In particular, an object of the invention is to provide a control system for multiphase voltage generators, as described above, by which it is possible to selectively supply power to an electric charge with a required voltage value, at both high and low revolutions of the voltage generator, and the engine to which it is connected, without changing the electrical configuration of the generator, by a less complex circuit solution and a low energy dissipation, easy to control and at lower costs.

### BRIEF DESCRIPTION OF THE INVENTION

The above is obtainable by a method according to claim 1 and an electronic control system according to claim 2.

According to a first aspect of the invention, a method for powering an electric charge by a voltage generator operatively connected to a combustion engine has been provided, in which the voltage generator comprises a permanent magnet rotor and a stator having a number of phase windings connectable, in a controlled mode, to an electric charge in parallel to a capacitor and/or to an electric battery, respectively connectable to ground, characterised by the steps of:
- defining a threshold value F1 of the voltage frequency F of the generator, related to a threshold value of the number of revolutions (rpm) of the engine;
- detecting the voltage frequency F of the generator;
- connecting the phase windings to the electric charge by rectifier diodes for frequency values F higher than the preset threshold frequencies value F1, respectively connecting the phase windings to the electric charge by a DC-DC voltage booster-converter device for frequency values F lower than the present threshold frequencies value F1 indicated above.

According to another aspect of the invention, an electronic control system has been provided for selective powering an electric charge connected to a capacitor and/or a power supply battery, by a voltage generator operatively connected to a combustion engine, where the voltage generator comprises a permanent magnet rotor and a number of phase windings connectable to the electric charge, the capacitor and/or the power supply battery, respectively connectable to the ground, characterised in that the phase windings of the voltage generator are connectable, in a controlled mode, to ground by Power MOS electronic switches, and selectively connectable to the electric charge, the capacitor and/or the power supply battery by rectifier diodes, for rotational speeds of the rotor higher than a preset threshold value, respectively by a DC-DC voltage booster-converter for rotational speeds equal to or lower than the threshold value referred to above.

### BRIEF DESCRIPTION OF THE DRAWINGS

These and further characteristics of the method and the electronic control system for multiphase magneto generators according to the invention, will be more clearly evident from the description which follows of a preferential embodiment, with reference to the accompanying drawings, in which:
Fig. 1 shows a general layout of the electronic control and regulation system of the voltage generator;
Fig. 2 shows a diagram of the control block of figure 1.

### DETAILED DESCRIPTION OF THE INVENTION

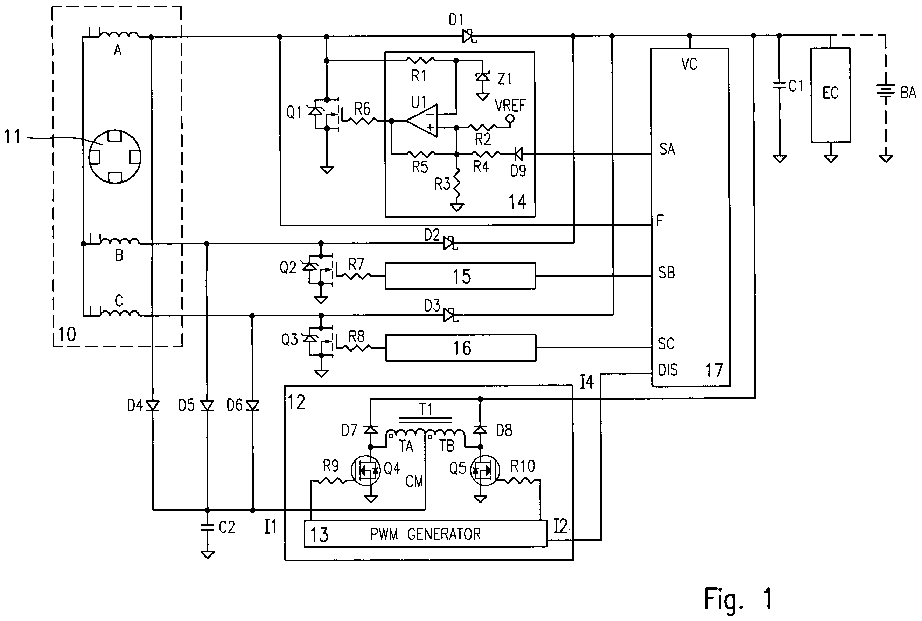

As shown in figure 1, the system comprises a magneto generator 10 for supplying power selectively to an electric charge EC, a capacitor C1 and/or to an electric battery BA connected in parallel to the electric charge EC, directly by rectifier diodes or respectively through a DC-DC voltage booster-converter circuit, more simply a "DC-DC converter", depending on the number of revolutions of the generator linked to the revolutions rpm of a combustion engine. For sake of simplicity, in the description a three-phase generator of permanent magnet type is considered below, even though the solution may be suitable for any multiphase voltage generator. The diagram of the DC-DC converter is also intended as an example only, since other known DC-DC converters may be used for purposes of the invention; for example, any DC-DC converter of the following type may be used: step-up, push-pull, semi-wave, full wave, provided they are suitable for the intended purpose.

The system shown comprises three phase windings A, B and C of a voltage generator 10, whose permanent magnet rotor 11 is operatively connected to an endothermic combustion engine, not shown. The phase windings A, B and C are connected on one side, to the anodes of diodes D4, D5, D6 respectively, the cathodes of which are connected to ground by a capacitor C2. The terminal in common to D4, D5, D6 and C2 is connected to an inlet I1 of a block 12 conformed to provide a booster DC-DC voltage converter. In particular, the capacitor C2 is connected to the terminal CM common to the two windings TA and TB of the voltage boostering transformer T1. The other terminal of the winding TA is connected both to the Drain of a Power MOS transistor Q4, and to the anode of a diode D7. Correspondingly, the other terminal of TB is connected to the Drain of a Power MOS transistor Q5 and to the anode of a diode D8. The cathodes of D7 and D8 are both connected to the positive terminal of a power supply capacitor C1, in parallel to the electric charge EC, possibly with a battery BA whose other electrode is connected to the ground. Transistors Q4 and Q5 have their respective Source terminals connected to the ground, and gates connected to resistors R9 and R10 respectively. The ON and OFF switching of Q4 and Q5 is controlled by a pulse generator circuit 13, for example by a pulse width modulation, also known as PWM generator, which generates two push-pull square waves which switch ON and OFF the two transistors Q4 and Q5 in a manner linked with the frequency F of the voltage generator 10. The PWM generator 13, which controls the ON and OFF state of Q4 and Q5, may be of any type, for example may be a dedicated integrated circuit like UCC2808 of Texas Instruments, although alternative integrated circuits are available on the market, such as LM5033 of National Semiconductor.

The phase windings A, B and C are also connected to the anode of a respective Schottky diode D1, D2 and D3, the cathode of which is connected to a capacitor C1 supplying power to the electric charge EC, and to Drain electrodes of Power MOS transistors Q1, Q2 and Q3 connecting phase windings A, B and C to the ground. The three MOS Q1, Q2 and Q3 have, in turn, the Source electrode connected to ground and the Gate electrode connected, by resistors R6, R7 and R8, to respective control circuits 14, 15 and 16.

For easier description, reference will only be made to phase A and to control circuit 14, with the electronic solution proposed being intended as applicable for circuits 15 and 16 as well.

The circuit 14 which controls the Power MOS Q1, consists of a comparator U1 which receives, on its inverting inlet (-), a signal derived from phase A, through the resistor R1 and Zener Z1. The resistor R1 is connected to the winding A on one side, and to the negative terminal of U1 and to the cathode of Z1 on the other side; the latter Z1 in turn has its anode connected to ground.

A voltage divider consisting of resistors R2 and R3, is connected to the non-inverting inlet (+) of U1, to supply a voltage related to a reference voltage VREF. A resistor R5 connected between the positive terminal and the outlet of U1 guarantees a certain hysteresis around the inlet voltage value; so the output of comparator U1 acquires a positive saturation value when the voltage at the inverting terminal exceeds the voltage at the non-inverting terminal, or a negative saturation value when the voltage at the inverting terminal does not exceed the voltage present at the other inlet. In this way, the Power MOS transistor Q1 may be switched ON or OFF, in accordance with the positive and negative semi-waves of phase voltage A; specifically, it will be switched ON when the voltage is negative and switched OFF when the voltage is positive.

At the inlet side of circuit 14, in particular at the non-inverting terminal of U1, a signal SA also arrives from a control block 17, by diode D9 and resistor R4. Similarly, an identical inlet signal SB arrives at circuit 15 controlling Q2, whereas an inlet signal SC arrives at circuit 16 controlling Q3.

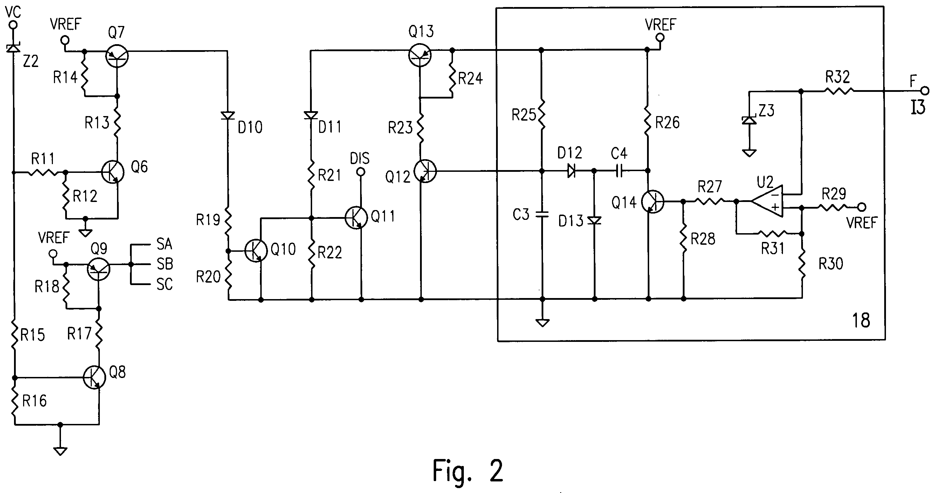

As shown in figure 2, the control block 17 comprises a Zener diode Z2 with a capacitor C1 connected to its cathode, and voltage dividers R11-R12 and R15-R16 connected to its anode.

The electrode in common to R11 and R12 is connected to the base electrode of an npn transistor Q6, which has the emitter connected to ground, and the collector connected, by the voltage divider R13-R14, to the base of pnp transistor Q7. This, in turn, has the emitter connected to the reference voltage VREF and the collector connected to the anode of diode D10. The cathode of D10 is connected to the voltage divider provided by the resistors R19-R20, whose common electrode drive the base of npn transistor Q10. In turn Q10 has the emitter connected to ground and the collector connected to the base of npn transistor Q11 which generates the signal DIS fed to the inlet I2 for switching OFF the PWM generator 13 of DC-DC converter 12.

Switching ON of Q11 is controlled through the diode D11 and the voltage divider R21-R22, by the collector of pnp transistor Q13. The base of Q13 is biased via voltage divider R23-R24 by npn transistor Q12. The base of Q12, on the other hand, is biased by the block 18, which detects or measures the frequency F of the voltage of generator 10, related to the number of revolutions of the rotor 11, or, more specifically, of the engine to which rotor 11 of the voltage generator is connected. This block 18 therefore receives at inlet I3 a frequency signal F of the voltage of the generator, e.g. frequency F of phase voltage A, which is supplied to the inverting inlet of comparator U2 via resistor R32 and Zener Z3. The resistor R32 is connected to the phase winding A on one side, and to the negative terminal of U2 and to the cathode of Z3 on the other side; the anode of the latter Z3 is connected to ground.

A reference voltage divider VREF, provided by resistors R29 and R30, is connected to the non-inverting inlet (+) of U2. A resistor R31, connected between the non-inverting inlet and the outlet of U2, guarantees a certain hysteresis around the inlet voltage value, so the outlet of comparator U2 may acquire a positive or negative saturation value. The outlet of U2 is supplied to the base of npn transistor Q14, by a voltage divider R27-R28. The transistor Q14 has the emitter connected to ground, whereas the collector is connected to the electrode of a capacitor C4 and to the terminal of a resistor R23, which has the other terminal connected to reference voltage VREF.

Capacitor C4 is also connected to an anode of a diode D13, and to the cathode of a diode D12, as shown. D12 has the anode connected to a capacitor C3 and to the electrode of a resistor R25, which in turn has a second electrode connected to the reference voltage VREF.

The anode of Zener Z2 is connected to the base of npn transistor Q8 via the voltage divider R15-R16. The transistor Q8 in turn has the emitter connected to ground and the collector connected to the base of pnp transistor Q9 via voltage divider R17-R18. Q9 has the emitter connected to reference voltage VREF and the collector connected to control circuits 14, 15 and 16.

Assuming capacitor C1 down, having a low charge, in the start-up phase the engine is at low revolutions, and the voltage generator 10 cannot charge the capacitor C1 to the desired voltage value. Power is supplied to PWM generator 13 of DC-DC converter 12 and it starts to generate two push-pull square waves, which control Q4 and Q5 alternatively, so that when Q4 is switched ON, Q5 is switched OFF, and vice versa. Assuming Q4 switched ON, there is the same voltage of C2 on both windings TA and TB, so D7 will be switched OFF and D8 will be switched ON. Subsequently, the switching ON and OFF of D7 and D8 will be inverted, so Q5 and D7 will be switched ON and Q4 and D8 will be switched OFF; in both cases, the voltages of TA and TB will be added together, supplying power to C1 and to the charge EC, with a double voltage, equal to the voltage required for charging C1 and supplying power to EC.

In the example of a DC-DC converter shown in figure 1, a higher voltage exists at the outlet I4 connected to the capacitor C1, for example double compared to the voltage at the inlet I1. When this voltage on C1 exceeds the value set by the network formed by Z2, R11 and R12, then Q6 switches ON, also switching ON Q7 via divider R11-R12. The transistor Q7 in turn, via D10 and voltage divider R19-R20 switches ON Q10, which consequently brings Q11 in saturation. In this way, the PWM generator 13 of DC-DC converter 12 is deactivated when the voltage at outlet I4 exceeds the desired value. However, on an increase in the number of revolutions of the engine, the generator 10 generates sufficient voltage to keep the capacitor C1 charged and the functioning of converter 12 becomes superfluous; it is therefore deactivated by signal DIS of control block 17. To achieve this, Q1 is also controlled via block 18, which measures the number of revolutions of generator 10 and therefore of the combustion engine, on the basis of the voltage frequency F of any one of the phases of generator 10. Block 18 receives at inlet I3 the frequency F of phase voltage A, which is supplied to the non-inverting inlet of U2 via resistor R32. The Zener Z3 sets a voltage to ensure the signal on the inverting inlet of comparator U2 has dynamics which vary from zero volts to the value set by Z3. Resistor R26 and R27 act as a divider for voltage VREF, defining a "threshold" voltage corresponding to a threshold value F1 of the frequency F of the generator 10 so that, when the voltage on the inverting inlet of U2 exceeds VRER, or the frequency F exceeds this "threshold" F1, then the outlet voltage of comparator U2 is equal to its negative saturation value. If, however, the voltage on the inverting inlet is equal to or less than the "threshold" VRFF or F is less than F1, then the outlet of comparator U2 is equal to its positive saturation value. In this manner, transistor Q14 is switched between ON and OFF state, via divider R24-R25, at the same inlet frequency as the phase A. Consequently, the current which the resistor R26 applies to capacitor C4 is also short-circuited to ground via Q14, with a frequency equal to the one of phase A.

A voltage square wave caused on the collector of Q14 and, via C4, switches ON diodes D12 and D13, discharging the capacitor C3. The change in voltage on C3 is therefore proportional to the frequency F of phase A. To ensure resistor R25 to maintain the voltage at the end terminals of C3 higher than the voltage of emitter-collector Vbe-on of npn transistor Q12, the latter is in saturation and, through the voltage divider formed by resistors R23 and R24, switches ON pnp transistor Q13. In this manner, Q12 is switched OFF at a specific value of the frequency F of phase A of the voltage generator 10, on the basis of the value of resistor R25. Transistor Q13, via D11 and voltage divider R21-R22, switches ON Q11, and Q11 in turn switches OFF the PWM generator of converter 12. This deactivates the DC-DC converter 12, at a certain phase frequency, i.e. at a specific threshold value of the number of revolutions of the engine. Above said number of revolutions, capacitor C1 is kept at the desired charge value only by control circuits 14, 15 and 16 of figure 1.

Considering now circuit 14, this receives the inlet phase A, which simultaneously charges the capacitor C1 supplying power to electric charge EC at the voltage value set by the network formed by Z2, R15 and R16. Assuming that the external charge EC makes capacitor C1 discharge at a lower voltage than the one set by the aforementioned network, the control circuits 14, 15 and 16 selectively control the Power MOS Q1, Q2 and Q3 between ON state and OFF state, on the basis of the phase present on their Drain terminal.

In particular, when a positive semi-wave is supplied to the Drain of Q1, then on the inverting inlet of U1 a voltage equal to the one set by Zener Z1 will exists. This voltage will be higher than the threshold voltage present on the non-inverting terminal of U1; so the comparator U1 will provide an outlet voltage equal to its negative saturation value. Therefore, on the Gate of Q1, a voltage will exists which keeps it in the OFF state, whereas Schottky diode D1 is biased directly and therefore a current, is flowing which discharges C1. When a negative semi-wave is supplied to the Drain of Q1, on the other hand, zero voltage is present on the inverting terminal of U1, and therefore lower than the one present on the non-inverting terminal. U1 therefore has an outlet voltage equal to its positive saturation value and switches ON Q1. In this way, the current from ground closes on the phase winding A.

If the voltage value on capacitor C1 exceeds the required regulation value, then Q8 in figure 2 switches ON and also switches ON Q9, via R17 and R18. The transistor Q9 generates signals SA, SB and SC, which control the respective circuits 14, 15 and 16 to ensure that Power MOS Q1, Q2 and Q3 are switched ON. The Power MOS diodes are kept switched ON for the entire time during which the voltage on C1 is higher than the required charge value. In particular, a current flows along diode and resistor D9-R4 of circuit 14 and on the same diodes and resistors of control circuits 15 and 16. The threshold voltage at the positive terminal of U1 therefore increases up to such a voltage value, so that, even during the positive semi-wave, Q1 is switched ON by U1, and phase A is short-circuited to ground. During the negative semi-wave, Q1 remains switched ON and allows current to flow from ground to the winding A; what has been said may refer to all phase windings of the voltage generator.

What is described above with reference to figures 1 and 2 has been provided by way of a preferential embodiment; therefore, other changes may be made without departing from the claims.

## Claims

1. A method for supplying power to an electric charge (EC) by a voltage generator (10) operatively connected to a combustion engine, in which the voltage generator (10) comprises a permanent magnet rotor (11) and a stator having a number of phase windings (A, B, C) connectable, in a controlled mode, to the electric charge (EC) in parallel to a capacitor (C1) and/or to a power supply battery (BA), respectively connectable to ground, comprising the steps of:
- defining a threshold value (F1) of the frequency (F) of the voltage generator (10), related to a threshold value of the number of revolutions (rpm) of the engine;
- detecting the frequency (F) of the voltage generator (10);
**characterized by** the steps of:
- connecting the phase windings (A, B, C) to the electric charge (EC) by rectifier diodes (D1, D2, D3) for frequency values (F) of the voltage generator (10) higher than the preset threshold frequency value (F1), respectively connecting the phase windings (A, B, C) to the electric charge (EC) by a DC-DC voltage boostering converter (12) for frequency values (F) of the voltage generator (10) lower than the threshold frequency value (F1).

2. An electronic control system for selective power supply to an electric charge (EC) according to the method of claim 1, in which the electric charge (EC) is connected in parallel to a capacitor (C1) and/or to an electric battery (BA), by a voltage generator (10) operatively connected to a combustion engine, in which the voltage generator (10) comprises a permanent magnet rotor (11) and a number of phase windings (A, B, C) connectable to the electric charge (EC), to the capacitor (C1) and/or to the battery (BA), respectively connectable to ground, **characterised in that** each of the phase windings (A, B, C) of the voltage generator (10) is connectable, in a controlled mode, to ground by Power MOS electronic switches (Q1, Q2, Q3), and selectively connectable to the electric charge (EC), the capacitor (C1) and/or the electric battery (BA) by a rectifier diode (D1, D2, D3), for rotational speeds of the rotor (11) corresponding to a frequency (F) of the generator (10) higher than the preset frequency threshold value (F1), respectively by a DC-DC voltage boostering converter (12) for rotational speeds corresponding to a frequency (F) of the generator (10) equal to or lower than the threshold frequency value (F1).

3. The electronic control system according to claim 2, **characterised in that** each phase winding (A, B, C) of the voltage generator (10) is directly connectable to the electric charge (EC), to the capacitor (C1) and/or to the battery (BA), by a Schottky diode (D1, D2, D3), and is connectable to ground by a Power MOS transistor (Q1, Q2, Q3) operatively connected to a control circuit (14) and to a control block (14, 15, 16) conformed to switch ON Power MOS transistor (Q1, Q2, Q3) during negative semi-waves of the voltage of the phase windings (A, B, C) of the generator (10), respectively to switch OFF the Power MOS transistor (Q1, Q2, Q3) during positive semi-waves of voltage of said phase windings (A, B, C).

4. The electronic control system according to claim 3, **characterised in that** the control block (14, 15, 16) is conformed to supply a control signal to the DC-DC converter (12), on the basis of the voltage frequency (F) of any one of the generator phase windings (A, B, C), on reaching a frequency corresponding to a threshold value of the number of revolutions of the rotor (11).

5. The electronic control system according to claim 2, **characterised in that** the DC-DC voltage boostering converter (12) comprising a transformer (TI) provided with first and second windings (TA, TB) having a central point connected to the phase windings (A, B, C), each winding (TA, TB) of said transformer (T1) being connectable to a respective control outlet of a PWM generator (13), by a Power MOS transistor (Q4, Q5), respectively being connectable to the electric charge (EC), the capacitor (C1) and/or the battery (BA) by a diode (D7, D8).

6. The electronic control system according to claim 2, **characterised by** the DC-DC voltage boostering converter (12) is selected from the following types: step-up, push-pull, semi-wave, full wave boostering devices.

## Patentansprüche

1. Verfahren zur Stromversorgung einer elektrischen Ladung (EC) durch einen Spannungsgenerator (10), der mit einer Verbrennungsmaschine betriebsfähig verbunden ist, in welchem der Spannungsgenerator (10) umfasst einen Dauermagnet-Rotor (11) und einen Stator mit einer Anzahl von Phasenwicklungen (A, B, C), die in einem gesteuerten Modus mit der elektrischen Ladung (EC) parallel geschaltet werden können mit einem Kondensator (C1) und/oder einer Stromversorgungsbatterie (BA), die jeweils mit Masse verbunden werden können, mit den Schritten:
- Definieren eines Grenzwertes (F1) der Frequenz (F) des Spannungsgenerators (10), der bezogen ist auf einen Grenzwert der Anzahl von Umdrehungen (rpm) des Motors;
- Detektieren der Frequenz (F) des Spannungsgenerators (10);
**gekennzeichnet durch** die Schritte:
- Verbinden der Phasenwicklungen (A, B, C) mit der elektrischen Ladung (EC) mittels Gleichrichterdioden (D1, D2, D3), für Frequenzwerte (F) des Spannungsgenerators (10) höher als dem voreingestellten Grenzfrequenzwert (F1), jeweils Verbinden der Phasenwicklungen (A, B, C) mit der elektrischen Ladung (EC) mittels eines DC/DC-Spannung-Verstärkungswandlers (12), für Frequenzwerte (F) des Spannungsgenerators (10) niedriger als dem Grenzfrequenzwert (F1).

2. Elektronisches Steuersystem zur selektiven Stromversorgung einer elektrischen Ladung (EC) nach dem Verfahren aus Anspruch 1, in welchem die elektrische Ladung (EC) durch einen Spannungsgenerator (10) mit einem Kondensator (C1) und/oder einer elektrischen Batterie (BA) parallel geschaltet ist, der betriebsfähig mit einem Verbrennungsmotor verbunden ist, in welchem der Spannungsgenerator (10) einen Dauermagnet-Rotor (11) und eine Anzahl von Phasenwicklungen (A, B, C) umfasst, die verbunden werden können mit der elektrischen Ladung (EC), mit dem Kondensator (C1) und/oder mit der Batterie (BA), die jeweils mit Masse verbunden werden können, **dadurch gekennzeichnet, dass** die Phasenwicklungen (A, B, C) des Spannungsgenerators (10) in einem gesteuerten Modus durch Power-MOS-Elektronikschalter (Q1, Q2, Q3) mit Masse verbunden sind und mittels einer Gleichschalterdiode (D1, D2, D3) selektiv verbunden werden können mit der elektrischen Ladung (EC), dem Kondensator (C1) und/oder der elektrischen Batterie (BA), für Drehgeschwindigkeiten des Rotors (11), die einer Frequenz (F) des Generators (10) entsprechen, die höher ist als der voreingestellte Frequenz-Grenzwert (F1) bzw. durch einen DC/DC-Spannung-Verstärkungswandler (12), für Drehgeschwindigkeiten, die einer Frequenz (F) des Generators (10) entsprechen, die gleich oder kleiner dem Grenz-Frequenzwert (F1) ist.

3. Elektronisches Steuersystem nach Anspruch 2, **dadurch gekennzeichnet, dass** die Phasenwicklung (A, B, C) des Spannungsgenerators (10) mittels einer Schottky-Diode (D1, D2, D3) mit der elektrischen Ladung (EC), mit dem Kondensator (C1) und/oder mit der Batterie (BA) direkt verbunden werden kann und mittels eines Power-MOS-Transistors (Q1, Q2, Q3) mit Masse verbunden werden kann, der betriebsfähig verbunden ist mit einer Steuerschaltung (14) und mit einem Steuerblock (14, 15, 16), die so ausgelegt sind, dass diese den Power-MOS-Transistor (Q1, Q2, Q3) während negativer Halbwellen der Spannung der Phasenwicklungen (A, B, C) des Generators (10) EIN-Schalten bzw. den Power-MOS-Transistor (Q1, Q2, Q3) während positiver Halbwellen der Spannung der Phasenwicklungen (A, B, C) AUS-Schalten.

4. Elektronisches Steuersystem nach Anspruch 3, **dadurch gekennzeichnet, dass** der Steuerblock (14, 15, 16) so ausgelegt ist, dass dieser auf der Basis der Spannungsfrequenz (F) einer der Generator-Phasenwicklungen (A, B, C) bei Erreichen einer Frequenz, die einem Grenzwert der Anzahl von Umdrehungen des Motors (11) entspricht, ein Steuersignal an den DC/DC-Wandler (12) sendet.

5. Elektronisches Steuersystem nach Anspruch 2, **dadurch gekennzeichnet, dass** der DC/DC-Spannung-Verstärkungswandler (12) einen Transformator (TI) umfasst, der mit einer ersten und zweiten Wicklung (TA, TB) versehen ist, die einen mit den Phasenwicklungen (A, B, C) verbundenen zentralen Punkt haben, wobei jede Wicklung (TA, TB) des Transformators (TI) durch einen Power-MOS-Transistor (Q4, Q5), der mittels einer Diode (D7, D8) jeweils mit der elektrischen Ladung (EC), dem Kondensator (C1) und/oder der Batterie (BA) verbunden werden kann, mit einem jeweiligen Steuerausgang eines PWM-Generators (13) verbunden werden kann.

6. Elektronisches Steuersystem nach Anspruch 2, **dadurch gekennzeichnet, dass** der DC/DC-Spannung-Verstärkungswandler (12) ausgewählt ist aus den folgenden Typen: Aufwärts-, Gegentakt-, Halbwelle-, Vollwelle-, Verstärkungseinrichtungen.

## Revendications

1. Procédé d'alimentation d'une charge électrique (EC) par un générateur de tension (10) opérativement connecté à un moteur à combustion, dans lequel le générateur de tension (10) comprend un rotor à aimants permanents (11) et un stator possédant un nombre d'enroulements de phase (A, B, C) connectables, dans un mode contrôlé, à la charge électrique (EC) en parallèle à une capacité (C1) et/ou à une batterie d'alimentation (BA), connectables respectivement à la masse, comprenant les étapes suivantes :
- définir une valeur de seuil (F1) de la fréquence (F) du générateur de tension (10), relative à une valeur de seuil du nombre de tours (tr/min) du moteur ;
- détecter la fréquence (F) du générateur de tension (10);
**caractérisé par** les étapes suivantes :
- connecter les enroulements de phase (A, B, C) à la charge électrique (EC) par des diodes de redressement (D1 D2, D3) pour des valeurs de fréquence (F) du générateur de tension (10) supérieures à la valeur seuil de fréquence prédéfinie (F1), connecter respectivement les enroulements de phase (A, B, C) à la charge électrique (EC) par un convertisseur élévateur de tension continu-continu (12) pour des valeurs de fréquence (F) du générateur de tension (10) inférieures à la valeur seuil de fréquence (F1).

2. Système de contrôle électronique pour l'alimentation sélective d'une charge électrique (EC) selon le procédé de la revendication 1, dans lequel la charge électrique (EC) est connectée en parallèle à une capacité (C1) et/ou à une batterie électrique (BA), par un générateur de tension (10) opérativement connecté à un moteur à combustion, dans lequel le générateur de tension (10) comprend un rotor à aimants permanents (11) et un nombre d'enroulements de phase (A, B, C) connectables à la charge électrique (EC), à la capacité (C1) et/ou à la batterie (BA), respectivement connectables à la masse, **caractérisé en ce que** chacun des enroulements de phase (A, B, C) du générateur de tension (10) est connectable, dans un mode contrôlé, à la masse par des commutateurs électroniques de type MOS de puissance (Q1, Q2, Q3), et connectable sélectivement à la charge électrique (EC), à la capacité (C1) et/ou à la batterie électrique (BA) par une diode de redressement (D1, D2, D3), pour des vitesses de rotation du rotor (11) correspondant à une fréquence (F) du générateur (10) supérieure à la valeur seuil de fréquence prédéfinie (F1), respectivement par un convertisseur élévateur de tension continu-continu (12) pour des vitesses de rotation correspondant à une fréquence (F) du générateur (10) égale à ou inférieure à la valeur seuil de fréquence (F1).

3. Système de contrôle électronique selon la revendication 2, **caractérisé en ce que** chaque enroulement de phase (A, B, C) du générateur de tension (10) est connectable directement à la charge électrique (EC), à la capacité (C1) et/ou à la batterie (BA), par une diode Schottky (D1, D2, D3), et est connectable à la masse par un transistor MOS de puissance (Q1, Q2, Q3) opérativement connecté à un circuit de commande (14) et à un bloc de commande (14, 15, 16) conformés pour mettre en position ON le transistor MOS de puissance (Q1, Q2, Q3) pendant les demi-ondes négatives de la tension des enroulements de phase (A, B, C) du générateur (10), respectivement pour mettre en position OFF le transistor MOS de puissance (Q1, Q2, Q3) pendant les demi-ondes de tension positives desdits enroulements de phase (A, B, C).

4. Système de contrôle électronique selon la revendication 3, **caractérisé en ce que** le bloc de commande (14, 15, 16) est conformé pour fournir un signal de commande au convertisseur continu-continu (12), en se basant sur la fréquence de tension (F) de l'un quelconque des enroulements de phase du générateur (A, B, C), en atteignant une fréquence correspondant à une valeur de seuil du nombre de tours du rotor (11).

5. Système de contrôle électronique selon la revendication 2, **caractérisé en ce que** le convertisseur élévateur de tension continu-continu (12) comprend un transformateur (TI) pourvu de premier et second enroulements (TA, TB) ayant un point milieu connecté aux enroulements de phase (A, B, C), chaque enroulement (TA, TB) dudit transformateur (T1) étant connectable à une sortie de commande respective d'un générateur PWM (13), par un transistor MOS de puissance (Q4, Q5), respectivement étant connectable à la charge électrique (EC), à la capacité (C1) et/ou à la batterie (BA) par une diode (D7, D8).

6. Système de contrôle électronique selon la revendication 2, **caractérisé en ce que** le convertisseur élévateur de tension continu-continu (12) est choisi parmi les types de dispositifs d'amplification suivants: dit "step-up", dit "push-pull", dit "à demi-onde", dit "à onde complète".
